# EUROPEAN PATENT APPLICATION

(11) **EP 3 786 897 A1**
(43) Date of publication of application: **03.03.2021**
(21) Application number: 20192708.4
(22) Date of filing: 25.08.2020
(51) Int. Cl.: G06T 11/20

(54) **DISPLAY PROCESSING DEVICE, DISPLAY PROCESSING METHOD AND PROGRAM**

(30) Priority: 27.08.2019 JP 2019154718
(71) Applicant: TOYOTA JIDOSHA KABUSHIKI KAISHA, TOYOTA-SHI, AICHI-KEN 471-8571 (JP)
(72) Inventor: KIMURA, Yosuke, TOYOTA-SHI, AICHI-KEN, 471-8571 (JP); OBUCHI, Tatsuya, TOYOTA-SHI, AICHI-KEN, 471-8571 (JP); FUJIMORI, Masaya, TOYOTA-SHI, AICHI-KEN, 471-8571 (JP); MORIAI, Takeo, TOYOTA-SHI, AICHI-KEN, 471-8571 (JP); MAJIMA, Hiroshi, TOYOTA-SHI, AICHI-KEN, 471-8571 (JP)
(74) Representative: Cabinet Beau de Loménie

(57) **Abstract**

An abnormal section that is a road section having an abnormal road condition is detected out of respective road sections, based on vehicle information from a plurality of vehicles. Out of roads in a displayed map, a small number of abnormal sections-part that has a number of consecutive abnormal sections (a continuous distance where the road condition is abnormal) less than a reference value is provided with state information in a first display mode. A large number of abnormal sections-part that has the number of consecutive abnormal sections equal to or greater than the reference value is provided with the state information in a second display mode that is different from the first display mode. The small number of abnormal sections-part and the large number of abnormal sections-part provided with the state information are displayed in a display device (43).

## Description

### Technical Field

The present disclosure relates to a display processing device, a display processing method and a program.

### Background

A proposed configuration of a display processing device generates information that correlates state information (for example, trouble information) indicating the condition of a road surface in each of taken images of areas including the road surface to position information indicating the position of the road surface and causes a displayed image that correlates each position in a map specified by the position information to state information indicating the condition of the road surface at the position to be displayed in a display device (as described in, for example, JP 2018-17102A).

### Citation List

### Patent Literature

PTL 1: JP2018-17102A

### Summary

A user (for example, a person in charge of a government office) can recognize a road section having an abnormal road condition by checking the displayed image described above. This is, however, insufficient as information required for the user to design a road maintenance plan (for example, a repair plan of the road surface). This is because the time period required for maintenance generally differs according to the number of consecutive abnormal road sections having the abnormal road condition (i.e., a continuous distance of the abnormal road condition).

A main object of a display processing device, a display processing method and a program according to the present disclosure is to enable the user to more readily design a road maintenance plan or the like.

In order to achieve the above primary object, the electrically driven vehicle of the disclosure is implemented by an aspect described below.

The present disclosure is directed to a display processing device. The display processing device configured to provide each of roads in a displayed map that is a map in a displayed range, with state information with regard to a road condition and to cause the road provided with the state information to be displayed in a display device, the display processing device including, a road condition detector configured to detect an abnormal section that is a road section having an abnormal road condition, out of respective road sections, based on vehicle information from a plurality of vehicles, and a display processor programmed to provide a small number of abnormal sections-part that has a number of consecutive abnormal sections less than a predetermined number, with the state information in a first display mode and provide a large number of abnormal sections-part that has the number of consecutive abnormal sections equal to or greater than the predetermined number, with the state information in a second display mode that is different from the first display mode, out of the roads in the displayed map and to cause the small number of abnormal sections-part and the large number of abnormal sections-part provided with the state information to be displayed in the display device.

The display processing device according to this aspect of the present disclosure detects the abnormal section that is the road section having the abnormal road condition, out of the respective road sections, based on the vehicle information from the plurality of vehicles. The display processing device provides the small number of abnormal sections-part that has the number of consecutive abnormal sections (continuous distance of the abnormal road condition) less than a reference value, with the state information in the first display mode, provides the large number of abnormal sections-part that has the number of consecutive abnormal sections equal to or greater than the reference value, with the state information in the second display mode that is different from the first display mode, out of the roads in the displayed map, and causes the small number of abnormal sections-part and the large number of abnormal sections-part provided with the state information to be displayed in the display device. This configuration enables a user to readily recognize two different types of parts (the small number of abnormal sections-part and the large number of abnormal sections-part) having different time periods required for maintenance of the road (for example, repair of the road). This accordingly enables the user to readily design a road maintenance plan or the like. The roads herein include not only public roads (roads and sidewalks) but private roads and parking places (for example, walkways).

In the display processing device of the above aspect, when a predetermined condition is satisfied for a middle part that is placed between two large number of abnormal sections-parts and that includes a number of road sections equal to or less than a second predetermined number, which is smaller than the predetermined number, out of the roads in the displayed map, the display processor may be programmed to provide the middle part with the state information in the second display mode and causes the middle part and the two large number of abnormal sections-parts provided with the state information in the second display mode to be displayed in the display device. When the predetermined condition is satisfied for a middle part, this configuration enables the user to recognize the middle part and two large number of abnormal sections-parts across the middle part as a sequential part. And the predetermined condition may include a non-estimable condition that the road condition of the middle part is not estimable . The predetermined condition may further include a sequential maintenance condition that requires maintenance of sequential roads of the middle part and the two large number of abnormal sections-parts . In this case, the sequential maintenance condition may include a condition that the number of consecutive abnormal sections in at least one of the two large number of abnormal sections-parts is equal to or greater than a third predetermined number, which is larger than the predetermined number.

In the display processing device of the above aspect, with regard to a high ratio range where a ratio of the abnormal sections to all road sections in each range of the displayed map is equal to or higher than a predetermined ratio, the display processor may be programmed to cause the high ratio range to be displayed in a third display mode in the display device or to provide all road sections in the high ratio range with the state information in a fourth display mode and cause all the road sections in the high ratio range provided with the state information in the fourth display mode to be displayed in the display device. This configuration enables the user to recognize the high ratio range.

The present disclosure is directed to a display processing method. The display processing method of providing each of roads in a displayed map that is a map in a displayed range, with state information with regard to a road condition and of causing the road provided with the state information to be displayed in a display device, the display processing method including, (a) detecting an abnormal section that is a road section having an abnormal road condition, out of respective road sections, based on vehicle information from a plurality of vehicles, and (b) providing a small number of abnormal sections-part that has a number of consecutive abnormal sections less than a predetermined number, with the state information in a first display mode, providing a large number of abnormal sections-part that has the number of consecutive abnormal sections equal to or greater than the predetermined number, with the state information in a second display mode that is different from the first display mode, out of the roads in the displayed map, and causing the small number of abnormal sections-part and the large number of abnormal sections-part provided with the state information to be displayed in the display device.

The display processing method according to this aspect of the present disclosure detects the abnormal section that is the road section having the abnormal road condition, out of the respective road sections, based on the vehicle information from the plurality of vehicles. The display processing method provides the small number of abnormal sections-part that has the number of consecutive abnormal sections (continuous distance of the abnormal road condition) less than a reference value, with the state information in the first display mode, provides the large number of abnormal sections-part that has the number of consecutive abnormal sections equal to or greater than the reference value, with the state information in the second display mode that is different from the first display mode, out of the roads in the displayed map, and causes the small number of abnormal sections-part and the large number of abnormal sections-part provided with the state information to be displayed in the display device. This configuration enables a user to readily recognize two different types of parts (the small number of abnormal sections-part and the large number of abnormal sections-part) having different time periods required for maintenance of the road (for example, repair of the road). This accordingly enables the user to readily design a road maintenance plan or the like. The roads herein include not only public roads (roads and sidewalks) but private roads and parking places (for example, walkways).

The present disclosure is directed to a program configured to cause a computer to serve as a display processing device configured to provide each of roads in a displayed map that is a map in a displayed range, with state information with regard to a road condition and to cause the road provided with the state information to be displayed in a display device. The program includes the steps of (a) detecting an abnormal section that is a road section having an abnormal road condition, out of respective road sections, based on vehicle information from a plurality of vehicles, and (b) providing a small number of abnormal sections-part that has a number of consecutive abnormal sections less than a predetermined number, with the state information in a first display mode, providing a large number of abnormal sections-part that has the number of consecutive abnormal sections equal to or greater than the predetermined number, with the state information in a second display mode that is different from the first display mode, out of the roads in the displayed map, and causing the small number of abnormal sections-part and the large number of abnormal sections-part provided with the state information to be displayed in the display device.

The program according to this aspect of the present disclosure detects the abnormal section that is the road section having the abnormal road condition, out of the respective road sections, based on the vehicle information from the plurality of vehicles. The program provides the small number of abnormal sections-part that has the number of consecutive abnormal sections (continuous distance of the abnormal road condition) less than a reference value, with the state information in the first display mode, provides the large number of abnormal sections-part that has the number of consecutive abnormal sections equal to or greater than the reference value, with the state information in the second display mode that is different from the first display mode, out of the roads in the displayed map, and causes the small number of abnormal sections-part and the large number of abnormal sections-part provided with the state information to be displayed in the display device. This configuration enables a user to readily recognize two different types of parts (the small number of abnormal sections-part and the large number of abnormal sections-part) having different time periods required for maintenance of the road (for example, repair of the road). This accordingly enables the user to readily design a road maintenance plan or the like. The roads herein include not only public roads (roads and sidewalks) but private roads and parking places (for example, walkways).

### Brief Description of Drawings

Fig. 1 is a configuration diagram illustrating the schematic configuration of a display system according to one embodiment of the present disclosure;
Fig. 2 is a flowchart showing one example of a road condition estimating process performed by a road condition estimator;
Fig. 3 is a flowchart showing one example of a sub process performed by the road condition estimator;
Fig. 4 is a flowchart showing one example of a status image providing process performed by a display processor;
Fig. 5 is a diagram illustrating one example of a displayed image on a display;
Fig. 6 is a flowchart showing one example of the status image providing process according to a modification;
Fig. 7 is a diagram illustrating one example of a displayed image on the display according to the modification; and
Fig. 8 is a flowchart showing one example of the status image providing process according to another modification.

### Description of Embodiments

The following describes some aspects of the present disclosure with reference to an embodiment.

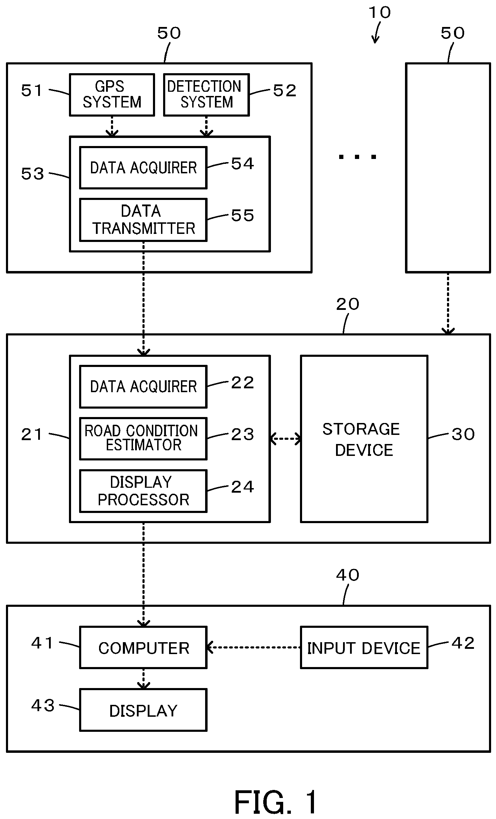

Fig. 1 is a configuration diagram illustrating the schematic configuration of a display system 10 according to one embodiment of the present disclosure. As illustrated, the display system 10 of the embodiment includes a server 20 that is configured to communicate with respective vehicles 50 wirelessly and that serves as the display processing device, and a terminal device 40 that is configured to communicate with the server 20 by wire or wirelessly. In the description below, roads include not only public roads (roads and sidewalks) but private roads and parking places (for example, walkways).

Each vehicle 50 includes a GPS system 51 configured to obtain location information with regard to the current location of the vehicle 50, a detection system 52 configured to detect behavior information with regard to the behavior of the vehicle 50, and an electronic control unit (hereafter referred to as "ECU") 53. The detection system 52 includes a sensor configured to detect information indicating the behavior of the vehicle 50, a sensor configured to detect information affecting the behavior of the vehicle 50, and a sensor configured to detect environmental information of the vehicle 50.

The information indicating the behavior of the vehicle 50 is, for example, at least one of a vehicle speed, a wheel speed, a longitudinal acceleration, a lateral acceleration, a yaw rate, a yaw angle, a roll angle, a pitch angle, and a tire slip ratio.

Examples of the information affecting the behavior of the vehicle 50 include an operating condition of an operation unit manipulatable by a driver and an operating condition of an assistant system for driving assistance of the vehicle 50. The operating condition of the operation unit is, for example, at least one of a steering angle and a steering speed of a steering wheel, a depression amount of an accelerator pedal, a depression amount of a brake pedal, a shift position of a shift lever and an operation or no operation of a direction indicator. The assistant system is, for example, at least one of a Lane Departure Alert (LDA) system, an Anti-lock Brake System (ABS), a TRaction control (TRC) system, and an Electronic Stability Control (ESC) system.

The sensor configured to detect the environmental information of the vehicle 50 is, for example, at least one of a camera, a radar and a LIDAR (Light Detection and Ranging).

The ECU 53 includes a CPU, a ROM, a RAM, a flash memory, input/ output ports and a communication port. This ECU 53 includes a data acquirer 54 and a data transmitter 55 as functional blocks provided by cooperation of the hardware configuration and the software configuration. The data acquirer 54 serves to obtain the location information of the vehicle 50 from the GPS system 51 and the behavior information of the vehicle 50 from the detection system 52. The data transmitter 55 serves to send the location information and the behavior information of the vehicle 50 obtained by the data acquirer 54, as vehicle information, to the server 20 wirelessly.

The server 20 includes an arithmetic processor 21 and a storage device 30. The arithmetic processor 21 includes a CPU, a ROM, a RAM, a flash memory, input/ output ports and a communication port. This arithmetic processor 21 includes a data acquirer 22, a road condition estimator 23, and a display processor 24 as functional blocks provided by cooperation of the hardware configuration and the software configuration. The data acquirer 22, the road condition estimator 23 and the display processor 24 are respectively configured to transmit data to and from the storage device 30.

The data acquirer 22 serves to obtain the vehicle information from a plurality of the vehicles 50 wirelessly and store the obtained vehicle information into the storage device 30. The road condition estimator 23 serves to estimate the road condition of each road section, based on the vehicle information from the plurality of vehicles 50, to generate (or update) a road condition database by correlating each road section to the road condition and to store the generated (or updated) road condition database into the storage device 30. Each road section herein is set, for example, as a section of about several tens centimeters to several meters. The display processor 24 serves to provide each road in a displayed map (a map in a displayed range) that is displayed on a display 43 of the terminal device 40, with a status image (state information) with regard to the road condition, based on map information and the road condition database and to send this data to a computer 41 of the terminal device 40 so as to be displayed on the display 43.

The storage device 30 is configured as, for example, a hard disk drive or an SSD (solid state drive). Various information required for the operations of the arithmetic processor 21 are stored in this storage device 30. The information stored in the storage device 30 include, for example, map information, vehicle information with regard to the plurality of vehicles 50 obtained by the data acquirer 22, and the road condition database generated by the road condition estimator 23.

The terminal device 40 is configured as, for example, a desktop personal computer, a notebook computer or a tablet terminal and includes a computer 41 and an input device 42 and a display 43 as a display device, which are connected with the computer 41. The computer 41 includes, for example, a CPU, a ROM, a RAM, a flash memory, a storage device (for example, a hard disk drive or an SSD), input/ output ports and a communication port. The input device used may be, for example, a mouse and a keyboard or a touch panel.

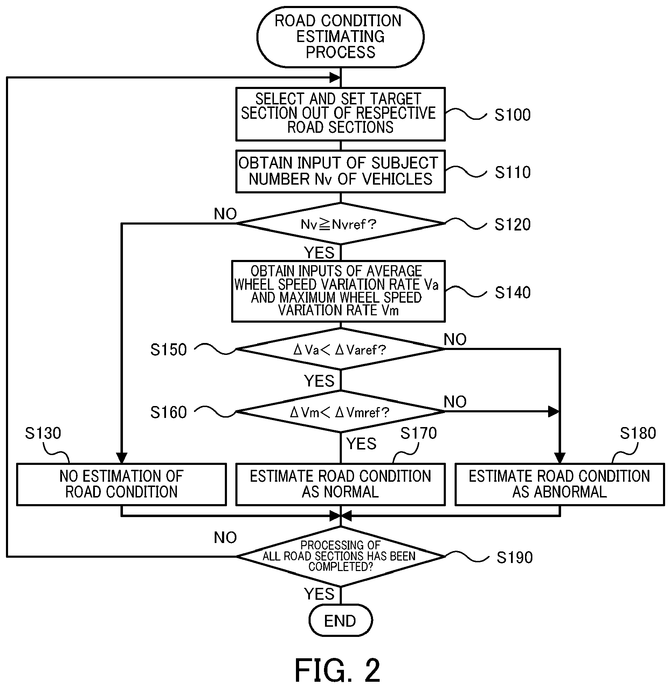

The following describes the operations of the server 20 of the embodiment having the configuration described above or more specifically the operations of the road condition estimator 23 and the display processor 24. The operations of the road condition estimator 23 are described first. Fig. 2 is a flowchart showing one example of a road condition estimating process performed by the road condition estimator 23. This routine is performed at regular intervals (for example, every day, every week or every month).

When the road condition estimating process of Fig. 2 is triggered, the road condition estimator 23 first selects one road section that has not yet been set as a target section, out of respective road sections of roads in an estimation requiring range where estimation of the road condition is required and sets the selected road section as a target section (step S100). The estimation requiring range is determined as a user's required range (for example, a prefectural range or a municipal range).

The road condition estimator 23 subsequently obtains the input of a number Nv of the vehicles 50 running in the target section during a target time period (hereinafter referred to as "subject number" Nv) (step S110). The target time period used is, for example, one day, one week or one month. This target time period may be identical with or different from the execution period of this routine. The subject number Nv input here is a calculated value (count value) based on the vehicle information from the plurality of vehicles 50 by a counting process (not shown). The counting process is appropriately performed by the road condition estimator 23.

The road condition estimator 23 subsequently compares the subject number Nv with a reference value Nvref (step S120) . The reference value Nvref is a threshold value used to determine whether the road condition of the target section is estimable with a certain level of accuracy and is, for example, about several to ten vehicles.

When it is determined at step S120 that the subject number Nv is less than the reference value Nvref, the road condition estimator 23 does not estimate the road condition of the target section (step S130) and determines whether all the road sections of the roads in the estimation requiring range have already been set as the target section (step S190) . When it is determined that there is any road section of the roads in the estimation requiring range that has not yet been set as the target section, the road condition estimator 23 returns the processing flow to step S100.

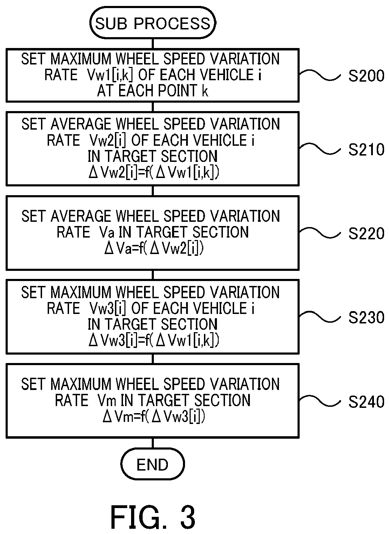

When it is determined at step S120 that the subject number Nv is equal to or greater than the reference value Nvref, on the other hand, the road condition estimator 23 subsequently obtain the inputs of an average wheel speed variation rate (a mean value of variations of the wheel speed per unit time) ΔVa and a maximum wheel speed variation rate (a maximum value of variations of the wheel speed per unit time) ΔVm in the target section of all the vehicles 50 running in the target section during the target time period (hereinafter referred to as "all subject vehicles") (step S140). The average wheel speed variation rate ΔVa and the maximum wheel speed variation rate ΔVm in the target section of all the subject vehicles input here are values set by a sub-process shown in Fig. 3. The sub-process of Fig. 3 is performed appropriately by the road condition estimator 23. The following describes the sub-process of Fig. 3 with interruption of the description of the road condition estimating process of Fig. 2.

When the sub-process of Fig. 3 is triggered, the road condition estimator 23 first sets a maximum wheel speed variation rate ΔVw1[i, k] (where i represents a variable assigned to each of the vehicles 50 and k represents a variable assigned to each point) at each point of the target section (minimal section) with regard to each of the vehicles 50 (respective vehicles 50) running in the target section during the target time period (hereinafter referred to as "each subject vehicle" or "respective subject vehicles") (step S200). More specifically, with regard to the vehicle 50 configured as a four-wheeled vehicle, the maximum wheel speed variation rate ΔVw1[i, k] set here is a maximum value out of respective wheel speed variation rates of a left front wheel, a right front wheel, a left rear wheel and a right rear wheel at each point of the target section. With regard to the vehicle 50 configured as a two-wheeled vehicle, the maximum wheel speed variation rate ΔVw1[i, k] set here is a maximum value out of respective wheel speed variation rates of a front wheel and a rear wheel at each point of the target section.

The road condition estimator 23 subsequently calculates an average wheel speed variation rate ΔVw2[i] of each subject vehicle in the (entire) target section, based on the maximum wheel speed variation rates ΔVw1[i, k] at the respective points of the target section (step S210) . The road condition estimator 23 then calculates an average wheel speed variation rate ΔVa of all the subject vehicles 50 in the target section, based on the average wheel speed variation rates ΔVw2[i] of the respective subject vehicles in the target section (step S220) .

The road condition estimator 23 subsequently sets a maximum wheel speed variation rate ΔVw3[i] of each subject vehicle in the target section to a maximum value out of the maximum wheel speed variation rates ΔVw1[i, k] of each subject vehicle at the respective points of the target section(step S230). The road condition estimator 23 then sets a maximum wheel speed variation rate ΔVm of all the subject vehicles 50 in the target section to a maximum value out of the maximum wheel speed variation rates ΔVw3[i] of the respective subject vehicles in the target section(step S240) and terminates the sub-process of Fig. 3. The method employable to set the average wheel speed variation rate ΔVa and the maximum wheel speed variation rate ΔVm of all the subject vehicles 50 in the target section is, however, not limited to this method.

The following goes back to the description of the road condition estimating process of Fig. 2. After obtaining the inputs of the average wheel speed variation rate ΔVa and the maximum wheel speed variation rate ΔVm of all the subject vehicles 50 in the target section at step S140, the road condition estimator 23 subsequently compares the average wheel speed variation rate ΔVa of all the subject vehicles in the target section with a reference value ΔVaref (step S150) and compares the maximum wheel speed variation rate ΔVm of all the subject vehicles in the target section with a reference value ΔVmref that is larger than the reference value ΔVarf (step S160) . The reference value ΔVaref and the reference value ΔVmref are threshold values used to determine whether the road condition of the target section is normal or abnormal, and are determined by experiments or by analyses. According to the embodiment, the abnormality of the road condition includes rough road surface (caving, ruts, cracks and separations) and potholes (more localized concaves and convexes and more localized holes compared with the rough road surface).

The processing of step S150 is described more in detail. When each vehicle 50 runs in a road section having the rough road surface, the rough road surface is likely to cause a variation in wheel speeds of the respective wheels of each vehicle 50 and is thereby likely to increase the wheel speed variation rate. By taking into account this, the process of the embodiment compares the average wheel speed variation rate ΔVa of all the subject vehicles in the target section with the reference value ΔVaref at step S150.

The processing of step S160 is described more in detail. In general, potholes are sufficiently small relative to the road width and the vehicle width. When each vehicle 50 runs in a road section having potholes, it is expected that a certain proportion of the vehicles 50 are not affected by the potholes. Accordingly, using the average wheel speed variation rate ΔVa of all the subject vehicles in the target section is likely to fail to detect the presence of potholes, due to the wheel speed variation rates of the vehicles 50 that are not affected by the potholes. It is, on the other hand, expected that there is a sufficiently large difference between the wheel speed variation rates of the vehicles 50 that are affected by the potholes and the wheel speed variation rates of the vehicles 50 that are not affected by the potholes (a larger difference than a difference between the wheel speed variation rates of the vehicles 50 that are affected by the rough road surface other than the potholes and the wheel speed variation rates of the vehicles 50 that are not affected by the rough road surface). By taking into account this, the process of the embodiment compares the maximum wheel speed variation rate ΔVm of all the subject vehicles in the target section with the reference value ΔVmref at step S160.

When the average wheel speed variation rate ΔVa of all the subject vehicles in the target section is lower than the reference value ΔVaref at step S150 and the maximum wheel speed variation rate ΔVm of all the subject vehicles in the target section is lower than the reference value ΔVmref at step S160, the road condition estimator 23 estimates that the road condition of the target section is normal (step S170). When the average wheel speed variation rate ΔVa of all the subject vehicles in the target section is equal to or higher than the reference value ΔVaref at step S150 or when the maximum wheel speed variation rate ΔVm of all the subject vehicles in the target section is equal to or higher than the reference value ΔVmref at step S160, on the contrary, the road condition estimator 23 estimates that the road condition of the target section is abnormal (step S180).

The road condition estimator 23 subsequently determines whether all the road sections of the roads in the estimation requiring range have already been set as the target section (step S190) . When it is determined that there is any road section of the roads in the estimation requiring range that has not yet been set as the target section, the road condition estimator 23 returns the processing flow to step S100.

When it is determined at step S190 that all the road sections of the roads in the estimation requiring range have already been set as the target section in the course of repetition of the processing of steps S100 to S190, the road condition estimator 23 terminates the road condition estimating process of Fig. 2. When the road condition estimating process is terminated, the road condition estimator 23 generates (updates) a road condition database showing the correlation of the road conditions to the road sections and stores the generated (updated) road condition database into the storage device 30.

Performing the road condition estimating process of Fig. 2 allows for detection of normal sections that are road sections of normal road condition and abnormal sections that are road sections of abnormal road condition, out of the respective road sections of the roads in the estimation requiring range.

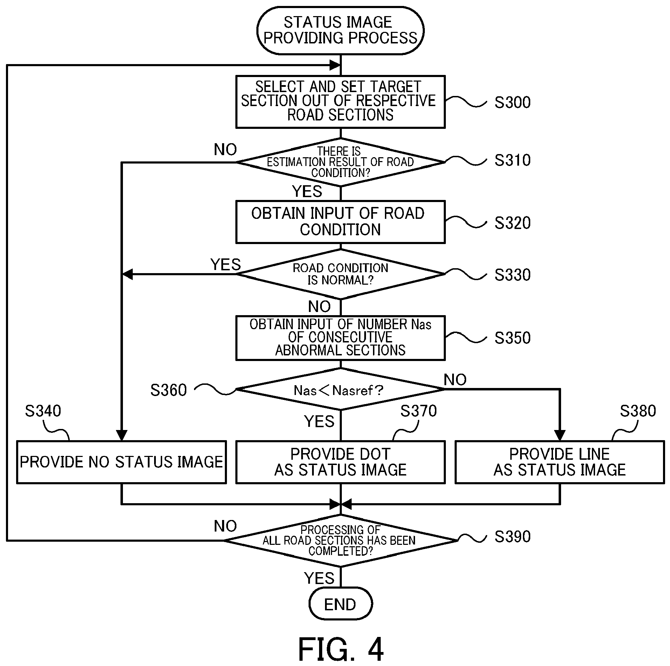

The following describes the operations of the display processor 24. Fig. 4 is a flowchart showing one example of a status image providing process performed by the display processor 24. This routine is performed to provide a displayed map (a map in a displayed range) on the display 43 in response to the user's operation of the input device 42. The displayed map is defined by the display scale and the user's desired displayed area and displayed district.

When the status image providing process of Fig. 4 is triggered, the display processor 24 first selects one road section that has not yet been set as a target section, out of respective road sections in the displayed map and sets the selected road section as a target section (step S300). The display processor 24 subsequently determines whether there is an estimation result of the road condition of the target section (step S310) . A concrete procedure of this determination checks the road condition database. When it is determined that there is no estimation result of the road condition of the target section, the display processor 24 does not provide the target section of the road in the displayed map with a status image (state information) with regard to the road condition (step S340) and determines whether all the road sections of the roads in the displayed map have already been set as the target section (step S390). When it is determined that there is any road section of the roads in the displayed map that has not yet been set as the target section, the display processor 24 returns the processing flow to step S300.

When it is determined at step S310 that there is an estimation result of the road condition of the target section, the display processor 24 obtains the input of the road condition of the target section (step S320) and determines whether the road condition of the target section is normal or abnormal (i.e., whether the target section is a normal section or an abnormal section) (step S330). When it is determined that the road condition of the target section is normal (i.e., that the target section is a normal section), the display processor 24 does not provide the target section of the road in the displayed map with the status image (step S340) and determines whether all the road sections of the roads in the displayed map have already been set as the target section (step S390). When it is determined that there is any road section of the roads in the displayed map that has not yet been set as the target section, the display processor 24 returns the processing flow to step S300.

When it is determined at step S330 that the road condition of the target section is abnormal (i.e., that the target section is an abnormal section), on the other hand, the display processor 24 obtains the input of a number Nas of consecutive abnormal sections including the target section (step S350) and compares the input number Nas of consecutive abnormal sections with a reference value Nasref (step S360). The reference value Nasref is a threshold value used to determine whether a time period required for maintenance of the road (for example, repair of the road) is equal to or shorter than a predetermined time period (for example, one day or two days) and is, for example, a value of about 4 to 6. The processing of step S360 is a process of determining whether the target section is included in a small number of abnormal sections-part where the number Nas of consecutive abnormal sections is less than the reference value Nasref or in a large number of abnormal sections-part where the number Nas of consecutive abnormal sections is equal to or greater than the reference value Nasref.

When the number Nas of consecutive abnormal sections is less than the reference value Nasref at step S360, the display processor 24 determines that the target section is included in the small number of abnormal sections-part and provides the target section of the road in the displayed map with a status image of a dot (step S370) . When the number Nas of consecutive abnormal sections is equal to or greater than the reference value Nasref at step S360, on the other hand, the display processor 24 determines that the target section is included in the large number of abnormal sections-part and provides the target section of the road in the displayed map with a status image of a line (step S380). The line of the target section continues from a start point to an end point of the target section. The display processor 24 then determines whether all the road sections of the roads in the displayed map have already been set as the target section (step S390). When it is determined that there is any road section of the roads in the displayed map that has not yet been set as the target section, the display processor 24 returns the processing flow to step S300.

When it is determined at step S390 that all the road sections of the roads in the displayed map have already been set as the target section in the course of repetition of the processing of steps S300 to S390, the display processor 24 terminates the status image providing process of Fig. 4. While performing the status image providing process of Fig. 4 as described above, the display processor 24 sends the displayed map and the status images of the respective road sections to the computer 41 of the terminal device 40 to be displayed on the display 43.

Performing the status image providing process of Fig. 4 provides each small number of abnormal sections-part with a dot and provides each large number of abnormal sections-part with a line, out of the roads in the displayed map. As described above, the line of a target section continues from the start point to the end point of the target section. Accordingly, the line continues over the entire large number of abnormal sections-part.

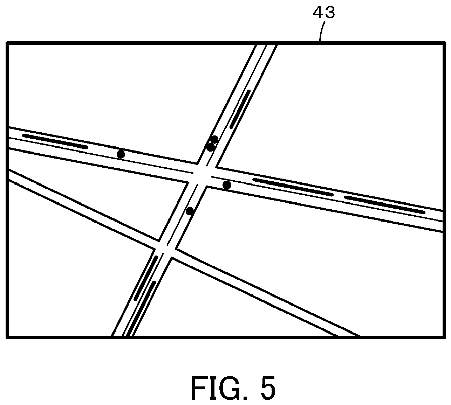

Fig. 5 is a diagram illustrating one example of a displayed image on the display 43. In Fig. 5, each part provided with a dot (closed circle) indicates a small number of abnormal sections-part, and each part provided with a line (thick solid line) indicates a large number of abnormal sections-part. The displayed image like Fig. 5 on the display 43 enables a user (for example, a person in charge of a government office) to readily recognize two different types of parts (the small number of abnormal sections-part and the large number of abnormal sections-part) having different time periods required for maintenance of the road (for example, repair of the road) . As a result, this enables the user to readily design a road maintenance plan or the like. For example, the maintenance plan may be designed in the unit of days for the small number of abnormal sections-part and may be designed in the unit of months or in the unit of years for the large number of abnormal sections-part.

The server 20 included in the display system 10 of the embodiment described above detects normal sections and abnormal sections out of the respective road sections of the roads in the estimation requiring range, based on the vehicle information from the plurality of vehicles 50. The server 20 then provides each small number of abnormal sections-part with a dot and provides each large number of abnormal sections-part with a line, out of the roads in the displayed map. This configuration enables the user to readily recognize the two different types of parts (the small number of abnormal sections-part and the large number of abnormal sections-part) having different time periods required for maintenance of the road. As a result, this enables the user to readily design the road maintenance plan or the like.

The server 20 included in the display system 10 of the embodiment also estimates the road condition of each road section out of the roads in the estimation requiring range, based on the vehicle information from the plurality of vehicles 50. This configuration allows such estimation to be performed more readily with the lower cost, compared with a configuration of using dedicated personnel and vehicles to estimate the road condition of each road section out of the roads in the estimation requiring range. Furthermore, with an increase in the number of vehicles 50 sending the vehicle information to the server 20, this server 20 can reduce the number of road sections where the number Nv of vehicles 50 running during the target time period is less than the reference value Nvref, i.e., the number of road sections that are not subject to estimation of the road condition, out of the respective road sections of the roads in the estimation requiring range.

The server 20 included in the display system 10 of the embodiment provides each small number of abnormal sections-part with a dot as the status image and provides each large number of abnormal sections-part with a line as the status image, out of the roads in the displayed map. The status image providing process is, however, not limited to this configuration but may provide the small number of abnormal sections-part and the large number of abnormal sections-part with different colors or with different shapes, out of the roads in the displayed map.

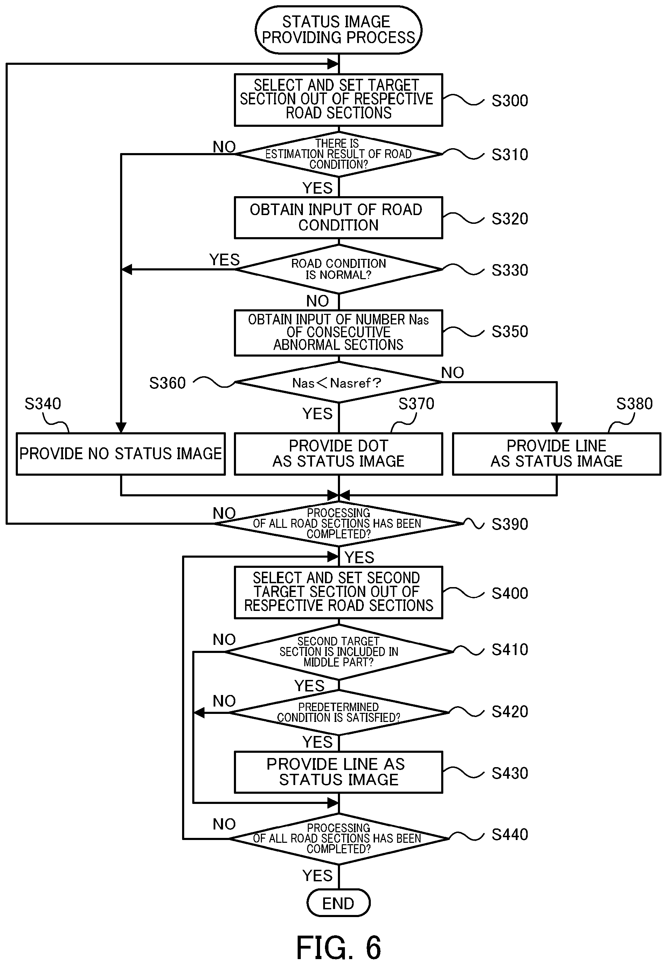

In the server 20 included in the display system 10 of the embodiment, the display processor 24 performs the status image providing process of Fig. 4. According to a modification, however, the display processor 24 may perform a status image providing process of Fig. 6. The status image providing process of Fig. 6 is similar to the status image providing process of Fig. 4, except addition of the processing of steps S400 to S440. Accordingly, in order to avoid repetition in description, like steps in the status image providing process of Fig. 6 to those in the status image providing process of Fig. 4 are expressed by like step numbers and their detailed description is omitted.

In the status image providing process of Fig. 6, when it is determined at step S390 that all the road sections of the roads in the displayed map have already been set as the target section, the display processor 24 selects one road section that has not yet been set as a second target section, out of the respective road sections of the displayed map and sets the selected road section as a second target section (step S400) .

The display processor 24 subsequently determines whether the second target section is included in a middle part (step S410) . The middle part herein means all a number of road sections that are placed between two large number of abnormal sections-parts and that are equal to or less than a reference value Nasref2, which is smaller than the reference value Nasref described above. According to this modification, the reference value Nasref2 used is set to a value 1. When it is determined that the second target section is not included in the middle part, the display processor 24 determines whether all the road sections of the roads in the displayed map have already been set as the second target section (step S440) . When it is determined that there is any road section of the roads in the displayed map that has not yet been set as the second target section, the display processor 24 returns the processing flow to step S400.

When it is determined at step S410 that the second target section is included in the middle part, on the other hand, the display processor 24 determines whether a predetermined condition is satisfied (step S420). The predetermined condition employed herein is, for example, a non-estimable condition that the road condition of the second target section is not estimable due to the lack of data (for example, the average wheel speed variation rate ΔVa or the maximum wheel speed variation rate ΔVm) used for estimation of the road condition of the second target section or a sequential maintenance condition that requires maintenance of sequential roads of a middle part and two large number of abnormal sections-parts across the middle part. The sequential maintenance condition may be, for example, a condition that the number Nas of consecutive abnormal sections in at least one of the two large number of abnormal sections-parts across the middle part is equal to or greater than a reference value Nasref3 that is larger than the reference value Nasref described above. The reference value Nasref3 used is set to, for example, a value of about 7 to 10.

When it is determined at step S420 that the predetermined condition is not satisfied, the display processor 24 determines whether all the road sections of the roads of the displayed map have already been set as the second target section (step S440). When it is determined that there is any road section of the roads in the displayed map that has not yet been set as the second target section, the display processor 24 returns the processing flow to step S400.

When it is determined at step S420 that the predetermined condition is satisfied, on the other hand, the display processor 24 provides the second target section of the roads of the displayed map with a line as the status image (step S430) and determines whether all the road sections of the roads of the displayed map have already been set as the second target section (step S440) . When it is determined that there is any road section of the roads in the displayed map that has not yet been set as the second target section, the display processor 24 returns the processing flow to step S400.

When it is determined at step S440 that all the road sections of the roads in the displayed map have already been set as the second target section in the course of repetition of the processing of steps S400 to S440, the display processor 24 terminates the status image providing process of Fig. 6. When the predetermined condition is satisfied with regard to a middle part out of the roads of the displayed map, the status image providing process of Fig. 6 described above provides a continuous line over the middle part and the two large number of abnormal sections-parts across this middle part. This configuration enables the user to design a road maintenance plan or the like, based on this information.

According to this modification, the reference value Nasref2 used is set to the value 1. The reference value Nasref2 used may, however, be set to a value of about 2 or 3. In the latter case, one middle part may include a plurality of road sections. When a plurality of road sections are included in one middle part, it is preferable to unify the selection of whether a line is to be provided or not for all these road sections. For example, when the predetermined condition is satisfied for all a plurality of road sections included in one middle part, one available procedure may provide all the road sections with a line. When the predetermined condition is not satisfied for at least one of the plurality of road sections included in one middle part, the procedure may not provide any of the road sections with a line.

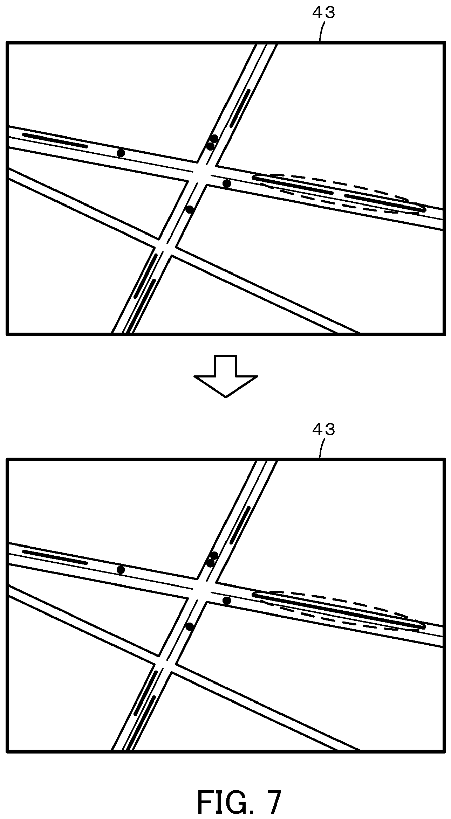

Fig. 7 is a diagram illustrating one example of a displayed image on the display 43. An upper drawing of Fig. 7 is identical with the diagram of Fig. 5. A lower drawing of Fig. 7 shows one example of a displayed image on the display 43 after the processing of steps S400 to S440 in the status image providing process of Fig. 6. A portion encircled by the broken line in Fig. 7 is changed by the processing of steps S400 to S440.

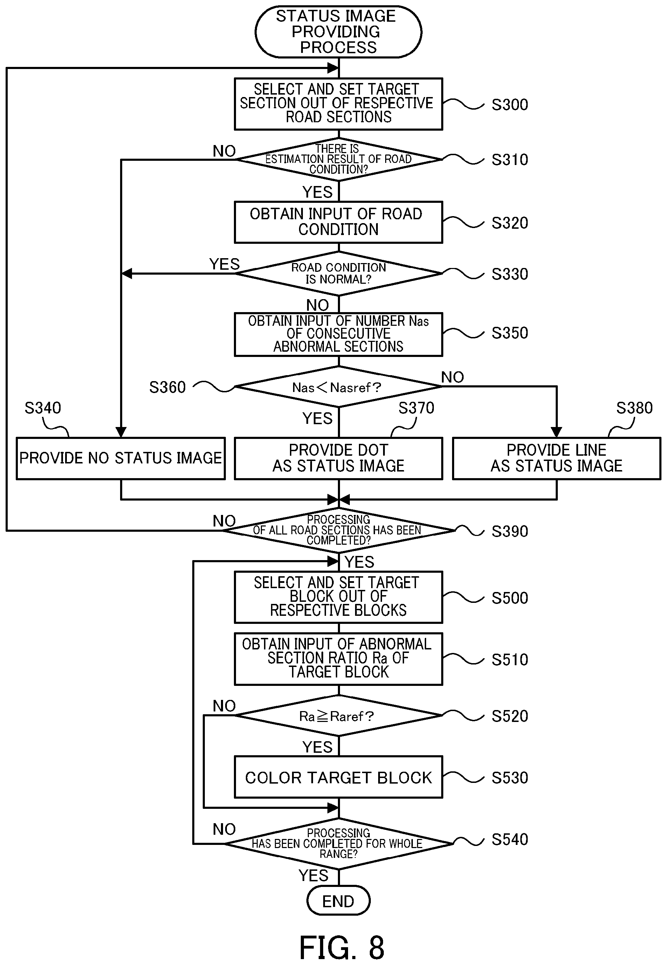

In the server 20 included in the display system 10 of the embodiment, the display processor 24 performs the status image providing process of Fig. 4. According to a modification, however, the display processor 24 may perform a status image providing process of Fig. 8. The status image providing process of Fig. 8 is similar to the status image providing process of Fig. 4, except addition of the processing of steps S500 to S540. Accordingly, in order to avoid repetition in description, like steps in the status image providing process of Fig. 8 to those in the status image providing process of Fig. 4 are expressed by like step numbers and their detailed description is omitted.

In the status image providing process of Fig. 8, when it is determined at step S390 that all the road sections of the roads in the displayed map have already been set as the target section, the display processor 24 selects one block that has not yet been set as a target block, out of respective blocks in the displayed map and sets the selected block as a target block (step S500). The display processor 24 subsequently obtains the input of an abnormal section ratio Ra of the target block (step S510) . The abnormal section ratio Ra of the target block input here is a value calculated as a ratio of abnormal sections to all road sections in the target block.

After obtaining the input of the abnormal section ratio Ra of the target block, the display processor 24 compares the input abnormal section ratio Ra of the target block with a reference value Raref (step S520) . The reference value Raref used is, for example, a value of about 0.6 to 0.8. When the abnormal section ratio Ra of the target block is lower than the reference value Raref, the display processor 24 determines whether all the blocks in the displayed map have already been set as the target block (step S540) . When it is determined that there is any block out of the respective blocks in the displayed map that has not yet been set as the target block, the display processor 24 returns the processing flow to step S500.

When the abnormal section ratio Ra of the target block is equal to or higher than the reference value Raref at step S520, on the other hand, the display processor 24 colors the target block (step S530) and then determines whether all the blocks in the displayed map have already been set as the target block (step S540) . When it is determined that there is any block out of the respective blocks in the displayed map that has not yet been set as the target block, the display processor 24 returns the processing flow to step S500.

When it is determined at step S540 that all the blocks in the displayed map have already been set as the target block in the course of repetition of the processing of steps S500 to S540, the display processor 24 terminates the status image providing process of Fig. 8. The processing of steps S500 to S540 in the status image providing process of Fig. 8 enables the user to recognize the block having the high abnormal section ratio Ra. As a result, this enables the user to design a road maintenance plan or the like, for example, for collectively maintaining the block having the high abnormal section ratio Ra.

The process of this modification colors the target block, when the abnormal section ratio Ra of the target block is equal to or higher than the reference value Raref. A further modification may provide the target block with any different display mode from the dot or the line. Another modification may provide all the road sections in the target block with a different status image from the dot or the line, for example, may color all the road sections in the target block.

The process of this modification determines whether coloring is to be performed in the unit of blocks in the displayed map. The unit of blocks may, however, be replaced by the unit of districts.

The server 20 included in the display system 10 of the embodiment provides each small number of abnormal sections-part with a dot and provides each large number of abnormal sections-part with a line, out of the roads in the displayed map. A modification may add a character string or a figure indicating the detailed type of the road condition or the situation of maintenance to the dot or the line. The detailed type of the road condition is, for example, rough road surface or potholes. A further detail, such as caving, ruts, cracks or separations may be indicated in place of the rough road surface. The situation of maintenance is, for example, construction not yet started; construction (repair) ordered; under construction; and completion of construction. The detailed type of the road condition may be set, for example, by the user (for example, a person in charge of a government office), based on the check results using a cruise car or based on reports from neighborhood inhabitants. The situation of the maintenance may be set, for example, by the user or a construction contractor.

In the server 20 included in the display system 10 of the embodiment, the road condition estimator 23 performs the road condition estimating process of Fig. 2 to estimate the road condition, based on the average wheel speed variation rate ΔVa and the maximum wheel speed variation rate ΔVm of the plurality of vehicles 50 with regard to each road section of the roads in the estimation requiring range. A modification may estimate the road condition, based on an average value and a maximum value of variations per unit time with regard to at least one of the vehicle speed, the longitudinal acceleration, the lateral acceleration, the yaw rate, the yaw angle, the roll angle, the pitch angle, and the tire slip ratio of the plurality of vehicles 50. A further modification may estimate the road condition, based on images taken by cameras of the plurality of vehicles 50. Another modification may estimate the road condition, based on an avoidance behavior ratio that is a ratio of the vehicles 50 which take avoidance behaviors to the total number of running vehicles 50. Additionally, the road condition may be estimated by any appropriate combination of these configurations. Examples of the avoidance behavior include a behavior of the vehicle 50 to temporarily move from an original lane across the centerline of the road or a lane marking (or to change the lane) and to return to the original lane, a behavior of the vehicle 50 to move across the centerline of the road or a lane marking without any operation of a direction indicator and a behavior of the vehicle 50 to quickly decelerate or to suddenly stop.

The server 20 included in the display system 10 of the embodiment does not provide the road sections without the estimation results of the road condition and the normal sections, out of the roads in the displayed map, with the status images. A modification may, however, provide each normal section out of the roads in the displayed map, with a status image having a different color or shape from those of the small number of abnormal sections-part and the large number of abnormal sections-part. This modified configuration enables the user to readily distinguish among the normal sections, the small number of abnormal sections-parts, the large number of abnormal sections-parts, and the road sections without the estimation results of the road condition.

The above embodiment describes the application of the present disclosure to the configuration of the server 20 serving as the display processing device to provide respective roads in a displayed map with state information and display the respective roads provided with the state information on the display 43 of the terminal device 40 and the application of the present disclosure to the configuration of the display method of providing respective roads in a displayed map with state information and displaying the respective roads provided with the state information on the display 43 of the terminal device 40. The present disclosure may also be applied to the configuration of a program that causes the server 20 to serve as the display processing device.

The following describes the correspondence relationship between the primary elements of the above embodiment and the primary elements of the disclosure described in Summary. The road condition estimator 23 of the embodiment corresponds to the "road condition estimator ", and the display processor 24 corresponds to the "display processor".

The correspondence relationship between the primary components of the embodiment and the primary components of the present disclosure, regarding which the problem is described in Summary, should not be considered to limit the components of the present disclosure, regarding which the problem is described in Summary, since the embodiment is only illustrative to specifically describes the aspects of the present disclosure, regarding which the problem is described in Summary. In other words, the present disclosure, regarding which the problem is described in Summary, should be interpreted on the basis of the description in Summary, and the embodiment is only a specific example of the present disclosure, regarding which the problem is described in Summary.

The aspect of the present disclosure is described above with reference to the embodiment. The present disclosure is, however, not limited to the above embodiment but various modifications and variations may be made to the embodiment without departing from the scope of the present disclosure.

### Industrial Applicability

The disclosure is applicable to, for example, the manufacturing industries of display processing devices.

## Claims

1. A display processing device (20) configured to provide each of roads in a displayed map that is a map in a displayed range, with state information with regard to a road condition and to cause the road provided with the state information to be displayed in a display device (43),
the display processing device (20) comprising:
a road condition detector (23) configured to detect an abnormal section that is a road section having an abnormal road condition, out of respective road sections, based on vehicle information from a plurality of vehicles; and
a display processor (24) programmed to provide a small number of abnormal sections-part that has a number of consecutive abnormal sections less than a predetermined number, with the state information in a first display mode and provide a large number of abnormal sections-part that has the number of consecutive abnormal sections equal to or greater than the predetermined number, with the state information in a second display mode that is different from the first display mode, out of the roads in the displayed map and to cause the small number of abnormal sections-part and the large number of abnormal sections-part provided with the state information to be displayed in the display device (43).

2. The display processing device (20) according to claim 1,
wherein when a predetermined condition is satisfied for a middle part that is placed between two large number of abnormal sections-parts and that includes a number of road sections equal to or less than a second predetermined number, which is smaller than the predetermined number, out of the roads in the displayed map, the display processor (24) is programmed to provide the middle part with the state information in the second display mode and causes the middle part and the two large number of abnormal sections-parts provided with the state information in the second display mode to be displayed in the display device (43) .

3. The display processing device (20) according to claim 2,
wherein the predetermined condition includes a non-estimable condition that the road condition of the middle part is not estimable.

4. The display processing device (20) according to either claim 2 or 3,
wherein the predetermined condition includes a sequential maintenance condition that requires maintenance of sequential roads of the middle part and the two large number of abnormal sections-parts.

5. The display processing device (20) according to claim 4,
wherein the sequential maintenance condition includes a condition that the number of consecutive abnormal sections in at least one of the two large number of abnormal sections-parts is equal to or greater than a third predetermined number, which is larger than the predetermined number.

6. The display processing device (20) according to any of claims 1-5,
wherein with regard to a high ratio range where a ratio of the abnormal sections to all road sections in each range of the displayed map is equal to or higher than a predetermined ratio, the display processor (24) is programmed to cause the high ratio range to be displayed in a third display mode in the display device (43) or to provide all road sections in the high ratio range with the state information in a fourth display mode and cause all the road sections in the high ratio range provided with the state information in the fourth display mode to be displayed in the display device (43).

7. A display processing method of providing each of roads in a displayed map that is a map in a displayed range, with state information with regard to a road condition and of causing the road provided with the state information to be displayed in a display device (43),
the display processing method comprising:
(a) detecting an abnormal section that is a road section having an abnormal road condition, out of respective road sections, based on vehicle information from a plurality of vehicles; and
(b) providing a small number of abnormal sections-part that has a number of consecutive abnormal sections less than a predetermined number, with the state information in a first display mode, providing a large number of abnormal sections-part that has the number of consecutive abnormal sections equal to or greater than the predetermined number, with the state information in a second display mode that is different from the first display mode, out of the roads in the displayed map, and causing the small number of abnormal sections-part and the large number of abnormal sections-part provided with the state information to be displayed in the display device (43).

8. A program configured to cause a computer to serve as a display processing device (20) configured to provide each of roads in a displayed map that is a map in a displayed range, with state information with regard to a road condition and to cause the road provided with the state information to be displayed in a display device (43),
the program comprising the steps of:
(a) detecting an abnormal section that is a road section having an abnormal road condition, out of respective road sections, based on vehicle information from a plurality of vehicles; and
(b) providing a small number of abnormal sections-part that has a number of consecutive abnormal sections less than a predetermined number, with the state information in a first display mode, providing a large number of abnormal sections-part that has the number of consecutive abnormal sections equal to or greater than the predetermined number, with the state information in a second display mode that is different from the first display mode, out of the roads in the displayed map, and causing the small number of abnormal sections-part and the large number of abnormal sections-part provided with the state information to be displayed in the display device (43).
